# EUROPEAN PATENT APPLICATION

(11) **EP 4 737 369 A1**
(43) Date of publication of application: **06.05.2026**
(21) Application number: 24910012.4
(22) Date of filing: 12.09.2024
(51) Int. Cl.: B65H 37/04

(54) **RFID ELECTRONIC TAG LAMINATING AND CUTTING INTEGRATED DEVICE**

(30) Priority: 26.12.2023 CN 202323583424 U
(71) Applicant: Qingdao Highway IOT Technology Co., Ltd., Qingdao, Shandong 266112 (CN)
(72) Inventor: DONG, Lanfei, Qingdao, Shandong 266112 (CN); CHEN, Haijun, Qingdao, Shandong 266112 (CN); WANG, Luxin, Qingdao, Shandong 266112 (CN); TENG, Xuezhi, Qingdao, Shandong 266112 (CN)
(74) Representative: Winter, Brandl - Partnerschaft mbB
(86) International application number: PCT/CN2024/118593
(87) International publication number: WO 2025/139066

(57) **Abstract**

The application provides an integrated laminating and cutting equipment for an RFID electronic tag, which includes a machine base (10); a laminating device (20); and a cutting device (40), where the laminating device (20) and the cutting device (40) are arranged on the machine base (10) and connected sequentially in the processing order, the laminating device (20) is capable of laminating a chip and rubber compound to form a laminated strip with a tag, the laminating device (20) includes a vertical plate (21), a chip feeding mechanism (22), and a rubber compound feeding mechanism (23), the chip feeding mechanism (22) and the rubber compound feeding mechanism (23) are mounted on the vertical plate (21); the cutting device (40) is capable of cutting the laminated strip, the cutting device (40) includes a frame (41), a cutting and conveying mechanism (42), a cutting mechanism (43), and a receiving mechanism (44). The integrated laminating and cutting equipment for the RFID electronic tag solves a problem that existing equipment cannot achieve efficient processing.

## Description

The present application claims a priority from Chinese patent application No. 202323583424.9 entitled "RFID ELECTRONIC TAG LAMININATING AND CUTTING INTEGRATED DEVICE", which is filed with CNIPA on December 26, 2023, and the entire contents of which are incorporated into the present disclosure by reference.

### FIELD

The present application relates to a field of tire equipment technology, and in particular to an integrated laminating and cutting equipment for an RFID electronic tag.

### BACKGROUND

In traditional tire tread production, vulcanized electronic tags serve as unique identifiers for tires throughout their circulation process. However, with the advancement of smart manufacturing and the increasing automation in the tire industry, a radio frequency identification (RFID) electronic tags for tires are poised for widespread application. Before RFID electronic tags are implanted into tires, pre-processing is required, for example, an RFID chip is encapsulated within a specially formulated rubber compound. After laminating it with two layers of rubber compound, the protective film on the strip is peeled off, followed by cutting, picking-up, and tagging.

Currently, tire production utilizes a laminating equipment and a cutting equipment for the electronic tag. The laminating equipment encapsulates and laminates the RFID chip, while the cutting equipment identifies and positions the strip, cuts individual chips, and then conveys the resulting individual electronic tags to their designated placement positions.

Existing laminating equipment and cutting equipment for the electronic tag have several problems:
1. The laminating equipment requires feeding rubber compound from both sides, which increases operator's operating time.
2. During the separation of a film from a surface of the strip, rollers in the intermediate buffer transition mechanism can easily pull the separated film for a distance, which causes film tearing or even breakage, thereby requiring frequent manual rewinding.
3. The cutting equipment can only position and cut a single tag at a time, resulting in a long cycle time for the entire process. In scenarios requiring large-scale production, this method is inefficient and cannot meet requirements.
4. Current production method for RFID electronic tag is performed by two separate equipment: the laminating equipment and cutting equipment, thereby leading to inefficient and relatively higher costs.
5. The original equipment requires manual opening of the device door for material retrieval, thereby increasing the time spent on door operations and manual handling.

Therefore, existing laminating and cutting equipment for electronic tag have several problems that prevent efficient processing, affecting both efficiency and quality.

### SUMMARY

The main objective of this application is to provide an integrated laminating and cutting equipment for an RFID electronic tag to solve the problem that existing laminating equipment and cutting equipment for an electronic tag cannot achieve efficient processing.

To achieve the above purpose, according to an aspect of the present application, an integrated laminating and cutting equipment for an RFID electronic tag is provided, which include a machine base; a laminating device; and a cutting device, where the laminating device and the cutting device are arranged on the machine base and connected sequentially in the processing order, where the laminating device is capable of laminating a chip and rubber compound to form a laminated strip with a tag, the laminating device includes a vertical plate, a chip feeding mechanism, and a rubber compound feeding mechanism, the chip feeding mechanism and the rubber compound feeding mechanism are mounted on the vertical plate; the cutting device is capable of cutting the laminated strip, the cutting device includes a frame, a cutting and conveying mechanism, a cutting mechanism, and a receiving mechanism.

In an optional embodiment, the laminating device further includes a rotating mechanism, the rotating mechanism includes: a support including a longitudinal segment and a transverse segment connected in sequence, the longitudinal segment being erected on the machine base, and the transverse segment extending transversely and being connected to a top end of the longitudinal segment; a rotating swing arm rotatably mounted through the transverse segment and located above the chip feeding mechanism and the rubber compound feeding mechanism; a rotating drive component connected to the support and drivingly connected to the rotating swing arm to rotate the rotating swing arm; a picking-up drive component arranged on the rotating swing arm and rotated along with the rotating swing arm, the picking-up drive component has a picking-up head for picking up at a bottom end.

In an optional embodiment, the laminating device further includes a laminating mechanism arranged on the rubber compound feeding mechanism, wherein the laminating mechanism is capable of laminating the chip conveyed to the rubber compound feeding mechanism with the rubber compound.

In an optional embodiment, the integrated laminating and cutting equipment for the RFID electronic tag further includes a transition device, where the transition device includes a guiding frame and a conveying roller, the guiding frame has a peeling surface which is capable of a film on a surface of the laminated strip with the tag during the laminated strip formed by laminating the chip with rubber compound passing through the transition device, where the peeling surface is located on a side of the guiding frame facing an input end of the transition device, and the peeling surface is inclined towards a direction closer to the laminated strip in the conveying direction of the laminated strip.

In an optional embodiment, the transition device further includes a film collecting reel, where the film is wound and collected on the film collecting reel, and moves along the peeling surface under the drive of the film collecting reel.

In an optional embodiment, a plurality of the guiding frames are arranged, where at least one of the guiding frames is provided with the peeling surface; a plurality of conveying rollers are arranged, wherein at least two of the conveying rollers are arranged opposite to each other vertically with a gap therebetween; the laminated strip passes through the gap between the vertically arranged conveying rollers; and the guiding frame is located at the conveying roller.

In an optional embodiment, the frame includes a plurality of crossbeams and a plurality of longitudinal beams, the plurality of crossbeams and the plurality of longitudinal beams form a frame structure; the cutting and conveying mechanism is located on an output side of the laminating device, and the laminated strip is conveyed to the cutting and conveying mechanism for cutting; at least a portion of the cutting mechanism is movably arranged on the crossbeam and moves in an extension direction of the crossbeam, the cutting mechanism is located above the cutting and conveying mechanism and is capable of cutting the laminated strip on the cutting and conveying mechanism; the receiving mechanism is transversely and movably arranged and located at a downstream process of the cutting conveying mechanism, and after the cutting mechanism cuts the laminated strip, the cut tags are conveyed to the receiving mechanism.

In an optional embodiment, the cutting mechanism includes: a cutting base body movably arranged on the crossbeam; a cutting drive component arranged at a bottom end of the cutting base body, where the cutting drive component has a cutting head for cutting the laminated strip at a bottom end; a transversing drive component arranged on the crossbeam and drivingly connected to the cutting base body to move transversely the cutting base body and the cutting drive component.

In an optional embodiment, the integrated laminating and cutting equipment for the RFID electronic tag further includes a receiving device, where the machine base includes a base body and a protective cover, the laminating device, the cutting device and the receiving device are arranged on the base body, and the protective cover covers the base body and covers an outside of the laminating device and the cutting device.

In an optional embodiment, the protective cover has an openable and closable safety door, the safety door is located at the receiving device, the receiving device is capable of receiving, coiling and conveying the tags cut in a previous process to an outside of the equipment, the receiving device is tiltable, and when the safety door is opened, the receiving device tilts out of the protective cover.

In an optional embodiment, the machine base further includes a fixed shaft, and the receiving device includes: a receiving base body rotatably arranged at the fixed shaft; a tilting drive component connected to the receiving base body and configured to tilt the receiving base body; a receiving hub rotatably arranged on the receiving base body, where when the receiving base body is tilted, the receiving hub extends out of the protective cover; and a receiving drive component drivingly connected to the receiving hub to rotate the receiving hub.

The technical solution of this application optimizes the laminating device and the cutting device, where the laminating device supplies chips and rubber compound through a chip feeding mechanism and a rubber compound feeding mechanism respectively, thereby facilitating manual feeding during material feeding and significantly improving feeding efficiency, thus increasing processing efficiency. The laminating device laminates the chips and rubber compound, and the laminated strip is conveyed to the cutting device for cutting. The cutting device achieves cutting and placement through a cutting and conveying mechanism, a cutting mechanism, and a receiving mechanism, thereby further improving processing efficiency. The integrated laminating and cutting equipment for the RFID electronic tag performs optimizing from both the laminating device and cutting device, thereby enabling continuous and efficient processing and thus improving processing efficiency. Furthermore, since this embodiment integrates laminating and cutting into a single equipment, the integrated laminating and cutting equipment for the RFID electronic tag can perform both laminating and cutting processes, thereby reducing the overall cost of the equipment compared to two separate devices while still meeting processing requirements.

### BRIEF DESCRIPTION OF THE DRAWINGS

The drawings constituting part of the present application are used to provide a further understanding of the present application. The exemplary embodiments and descriptions of the present application are used to explain the present application and do not constitute an improper limitation on the present application, in which:
Fig. 1 illustrates a front view of an integrated laminating and cutting equipment for an RFID electronic tag according to an embodiment of the present application;
Fig. 2 illustrates an isometric view of Fig. 1;
Fig. 3 illustrates a structural schematic diagram of Figure 1 without a machine base;
Fig. 4 illustrates a structural schematic diagram of the laminating device in Fig. 1;
Fig. 5 illustrates a structural schematic diagram of the rotating mechanism in Fig. 4;
Fig. 6 illustrates a structural schematic diagram of the transition device in Fig. 1;
Fig. 7 illustrates a structural schematic diagram of the guiding frame in Fig. 6;
Fig. 8 illustrates an isometric view of Fig. 7;
Fig. 9 illustrates a structural schematic diagram of the cutting device and the receiving device in Fig. 1;
Fig. 10 illustrates a structural schematic diagram of the cooperation between the frame and the cutting mechanism in Fig. 9;
Fig. 11 illustrates a structural schematic diagram of the receiving device in Fig. 9.

The above figures include the following reference numerals: 10. Machine base; 11. Base body; 12. Protective cover; 121. Safety door; 20. Laminating device; 21. Vertical plate; 22. Chip feeding mechanism; 23. Rubber compound feeding mechanism; 24. Rotating mechanism; 241. Support; 242. Rotating swing arm; 243. Rotating drive component; 244. Picking-up drive component; 25. Laminating mechanism; 30. Transition device; 31. Guiding frame; 311. Peeling surface; 32. Conveying roller; 33. Film collecting reel; 40. Cutting device; 41. Frame; 42. Cutting and conveying mechanism; 43. Cutting mechanism; 431. Cutting base body; 432. Cutting drive component; 433. Transversing drive component; 44. Receiving mechanism; 50. Receiving device; 51. Receiving base body; 52. Tilting drive component; 53. Receiving hub; 54. Receiving drive component.

### DESCRIPTION OF THE PREFERRED EMBODIMENTS

It should be noted that, in the absence of conflict, the embodiments and features in the embodiments of the present application can be combined with each other. The present application would be described in detail below with reference to the accompanying drawings and in combination with the embodiments.

To address the problem that existing laminating equipment and cutting equipment cannot achieve efficient processing, this application provides an integrated laminating and cutting equipment for an RFID electronic tag.

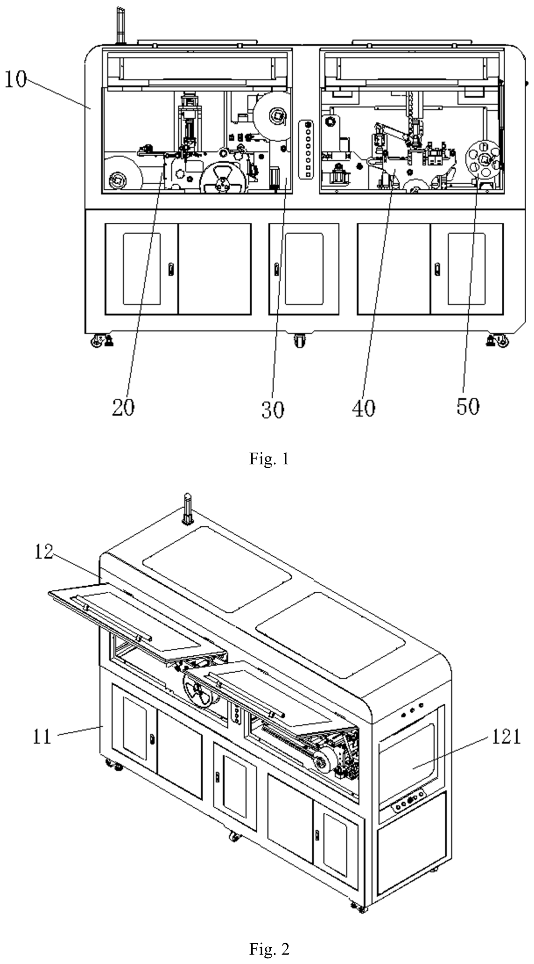

As shown in Figs. 1 to 11, the integrated RFID electronic tag laminating and cutting equipment includes a machine base 10, and a laminating device 20 and a cutting device 40 sequentially connected on the machine base 10 in the processing order. The laminating device 20 laminates chips and rubber compound to form a laminated strip with tags. The laminating device 20 includes a vertical plate 21, a chip feeding mechanism 22, and a rubber compound feeding mechanism 23, which are mounted on the vertical plate 21. The cutting device 40 cuts the laminated strip and the cutting device 40 includes a frame 41, a cutting and conveying mechanism 42, a cutting mechanism 43, and a receiving mechanism 44.

This embodiment optimizes the laminating device 20 and the cutting device 40. The laminating device 20 supplies chips and rubber compound through a chip feeding mechanism 22 and a rubber compound feeding mechanism 23 respectively, thereby facilitating manual feeding during material feeding and significantly improving feeding efficiency, thus increasing processing efficiency. The laminating device 20 laminates the chips and rubber compound, and the laminated strip is then conveyed to the cutting device 40 for cutting. The cutting device achieves cutting and placement through a cutting and conveying mechanism 42, a cutting mechanism 43, and a receiving mechanism 44, thereby further improving processing efficiency. The integrated laminating and cutting equipment for the RFID electronic tag performs optimizing from two aspects: the laminating device 20 and the cutting device 40, so that it enables continuous and efficient processing and thus improving processing efficiency. Furthermore, since this embodiment integrates laminating and cutting into a single equipment, the integrated laminating and cutting equipment for the RFID electronic tag can perform both laminating and cutting processes, thereby reducing the overall cost of the equipment compared to two separate devices while meeting processing requirements.

In this embodiment, the laminating device 20 has a vertical plate 21, and the chip feeding mechanism 22 and the rubber compound feeding mechanism 23 are located on the same side of the vertical plate 21. This allows for manual feeding from the same side, thereby eliminating the need to switch positions back and forth between both sides, thus facilitating feeding and significantly improving feeding efficiency, which in turn increases processing efficiency.

In addition to the laminating device 20 and the cutting device 40, the integrated laminating and cutting equipment for the RFID electronic tag in this embodiment further includes a transition device 30 and a receiving device 50. The laminating device 20, transition device 30, cutting device 40, and receiving device 50 are arranged sequentially in the processing order.

This embodiment optimizes the laminating device 20 and the transition device 30. The laminating device 20 is designed with the chip feeding mechanism 22 and the rubber compound feeding mechanism 23 positioned on the same side. Meanwhile, the guiding frame 31 of the transition device 30 is equipped with a peeling surface 311. The integrated laminating and cutting equipment for the RFID electronic tag performs optimizing from two aspects: the laminating device 20 and the transition device 30, so that it enables continuous and efficient processing and thus improving processing efficiency. Furthermore, this embodiment integrates laminating and cutting into a single equipment, so that the integrated laminating and cutting equipment for the RFID electronic tag can perform both laminating and cutting processes, thereby reducing the overall cost of the equipment compared to two separate devices while meeting processing requirements.

It should be noted that the basic structure of the laminating device 20, transition device 30, cutting device 40, and receiving device 50 in this embodiment-that is, the structure that realizes their functions-can adopt existing technical solutions. Therefore, this embodiment mainly describes the improved and optimized structure; other structures which are not described can refer to existing technical solutions and no further details would be provided herein.

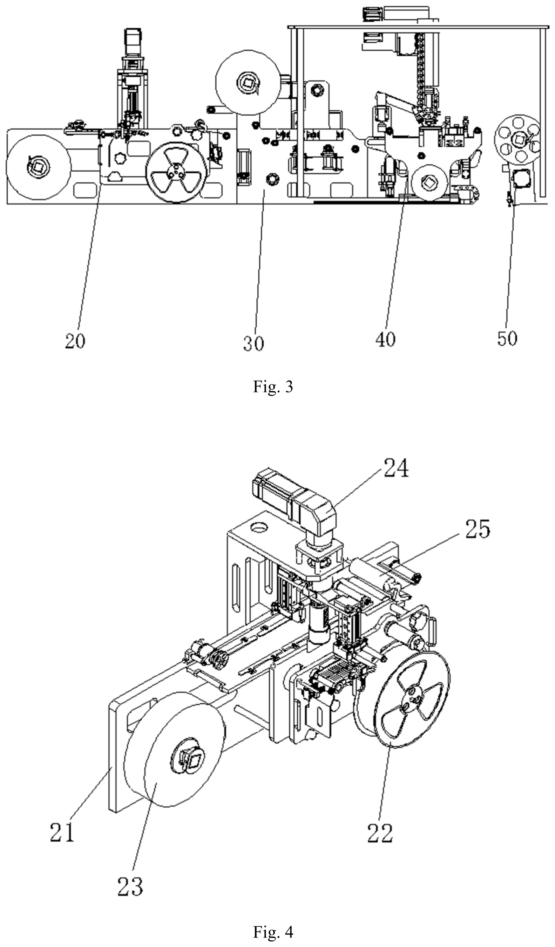

As shown in Fig. 4, the laminating device 20 of this embodiment mainly includes a chip feeding mechanism 22, a rubber compound feeding mechanism 23, a rotating mechanism 24, and a laminating mechanism 25. Its workflow is as follows: First, the chip feeding mechanism 22 accurately positions the RFID chips in the carrier strip and peels off the packaging film above them. Then, the rotating mechanism 24 picks up the positioned chips, rotates them by 180°, and places them on the lower-layer rubber compound from the rubber compound feeding mechanism 23. Finally, the laminating mechanism 25 wraps and laminates the tag by using both the upper and lower layers of rubber compound.

The chip feeding mechanism 22 of this embodiment includes a film-peeling reel, a chip reel, a feeding motor, a chip picking-up platform, a belt shaft, and a chip positioning sensor. Its operation involves the feeding motor driving the belt shaft to rotate, which in turn pulls and unwinds the chip reel. During unwinding, the film-peeling reel peels off the upper encapsulation film from the reel. The chip strip with the encapsulation film removed is then positioned by the chip positioning sensor on the chip picking-up platform, thereby accurately positioning the chip on the chip reel. The rubber compound feeding mechanism 23 of this embodiment includes a rubber compound reel and a conveying belt. The rubber compound on the rubber compound reel is conveyed on the conveying belt by the power of the conveying belt and conveyed to the area below the rotating mechanism 24 and the laminating mechanism 25.

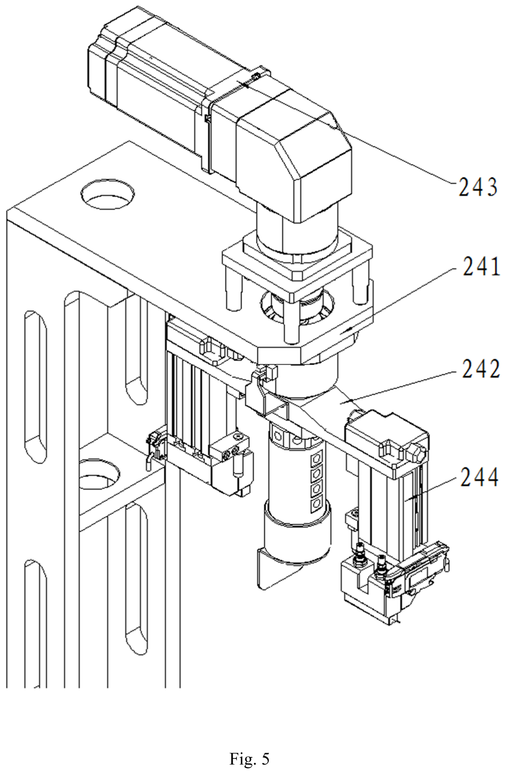

As shown in Fig. 5, the rotating mechanism 24 of this embodiment includes a support 241, a rotating swing arm 242, a rotating drive component 243, and a picking-up drive component 244. The support 241 includes a longitudinal segment and a transverse segment connected in sequence. The longitudinal segment is erected on the machine base 10, and the transverse segment extends transversely and connects to the top of the longitudinal segment, thus forming an inverted L-shaped structure. This arrangement is adopted since if the chip feeding mechanism 22 and the rubber compound feeding mechanism 23 are placed on the same side of the vertical plate 21, the installation of the rotating mechanism 24 is constrained and cannot be installed on the worktable. Therefore, the support 241 is independently provided. The support 241 can support the components of the laminating device 20, thereby enabling the picking-up head to still perform operations like picking. The rotating swing arm 242 is rotatably mounted longitudinally through the transverse segment, and is located above the chip feeding mechanism 22 and the rubber compound feeding mechanism 23. The rotating drive component 243 may be a motor or the like, which is fixedly mounted on the support 241, and its output end is drivingly connected to the rotating swing arm 242, thereby driving the rotating swing arm 242 to rotate. The picking-up drive component 244 may be a cylinder or the like, which is arranged on the rotating swing arm 242 and rotates along with the rotating swing arm 242. The bottom end of the picking-up drive component 244 has a picking-up head for picking up rubber compound. One or more picking-up drive component 244 may be used as needed. In this embodiment, a plurality of picking-up drive components 244 are provided to improve efficiency. Specifically, two picking-up drive components 244 are provided, and the two picking-up drive components 244 are located at the two ends of the rotating swing arm 242, while the rotation axis of the rotating swing arm 242 is located in the middle. In this way, when the rotating swing arm 242 rotates, the picking-up drive components 244 at both ends can pick up the chips respectively, thereby realizing the picking up of multiple chips, and thus improving processing efficiency.

In this embodiment, the laminating mechanism 25 is mounted on the rubber compound feeding mechanism 23 and is capable of laminating the chip and rubber compound fed to the rubber compound feeding mechanism 23 together. The laminating device 20 in this embodiment includes components such as a rubber compound pressing roller, a laminating cylinder, a laminating power roller, a laminating motor, and a rubber compound guiding roller. Its operation involves the laminating motor driving the laminating power roller to rotate, the laminating cylinder actuating, the rubber compound pressing roller laminating downwards, and the laminating power roller driving the rubber compound pressing roller to rotate, thus laminating the two layers of rubber compound.

The transition device 30 in this embodiment includes a guiding frame 31 and a conveying roller 32. The guiding frame 31 has a peeling surface 311. The laminated strip in which the chip and rubber compound are laminated together passes through the transition device 30, where the film on the surface of the laminated strip with the tag is peeled off. During the peeling process, the peeling surface 311 guides the peeled film, ensuring it moves along the direction of the peeling surface 311 for collection. This prevents the film from being pulled into the conveying roller 32 and causing tearing or breakage. As a result, the film can be collected continuously, reducing the time required for manual rewinding the film and thereby improving processing efficiency.

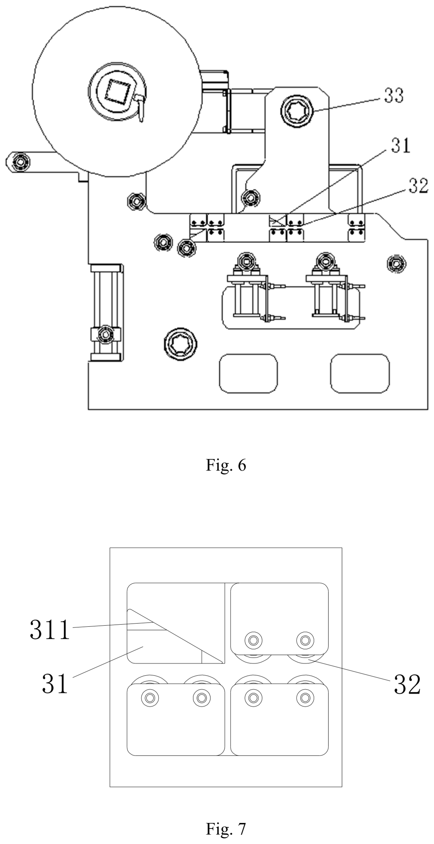

As shown in Figs. 6 to 8, in this embodiment, the peeling surface 311 is located on the side of the guiding frame 31 facing the input end of the transition device 30. Along the conveying direction of the laminating strip, the peeling surface 311 is inclined towards the laminating strip, that is, in Figs. 6 and 7, the conveying direction from left to right. The peeling surface 311 on the upper guiding frame 31 is inclined downwards to the right. Thus, along the conveying direction of the laminating strip, the film is peeled at a leftward tilt, thereby preventing it from being pulled into the conveying roller 32 and tearing.

In this embodiment, the transition device 30 further includes a film collecting reel 33, which is used to wind the film. During operation, the operator first peels off the leading end of the film and winds it on the film collecting reel 33. As the film collecting reel 33 rotates, it drives the film to peel off from the strip, guiding the peeled film along the peeling surface 311 while simultaneously collecting the film.

In this embodiment, a plurality of guiding frames 31 are provided to ensure the stability of the laminating strip conveyed by the transition device 30. These guiding frames 31 are arranged along the conveying direction of the laminating strip. At least one guiding frame 31 has a peeling surface 311. Preferably, the peeling surface 311 is provided on the guiding frame 31 at the film peeling location. Other guiding frames 31 may not have a peeling surface 311, but for ease of uniform processing, all guiding frames 31 may have a peeling surface 311.

The conveying rollers 32 in this embodiment are also multiple in number. At least two conveying rollers 32 are arranged vertically opposite each other with a gap between them. The laminated strip passes through the gap between the vertically arranged conveying rollers 32. In this embodiment, the conveying rollers 32 are arranged in pairs, with two rollers 32 aligned vertically to clamp and stabilize the laminated strip. Simultaneously, as the conveying rollers 32 rotate, the laminated strip can be conveyed. Due to the aforementioned arrangement of the conveying rollers 32, the guiding frame 31 is located at the conveying rollers 32, or more precisely, on the input side of the mounting frame where the conveying rollers 32 are installed. This ensures that the peeled film is immediately guided away from the laminated strip by the peeling surface 311, guaranteeing the peeling effect. The specific arrangement of the guiding frame 31 and the conveying rollers 32 is not limited to the arrangement described in this embodiment; other arrangements can also be used.

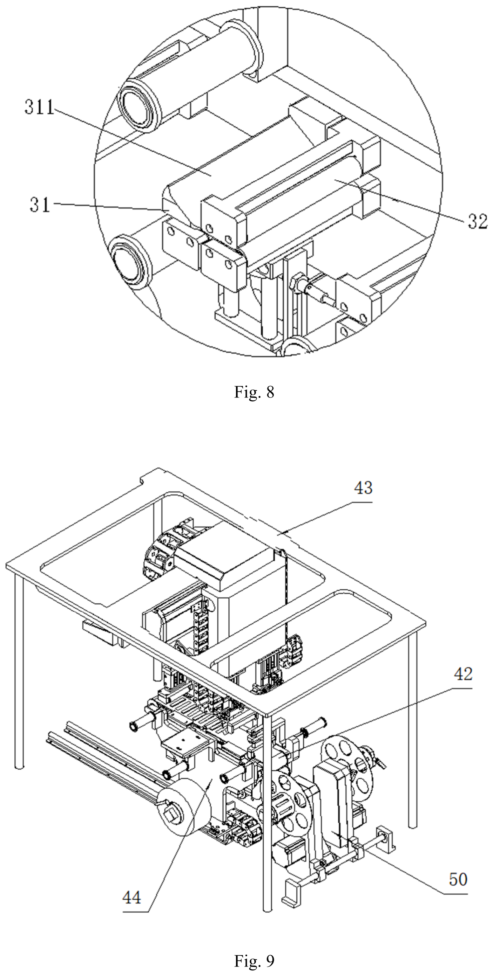

As shown in Fig. 9, in this embodiment, the cutting device 40 includes a frame 41, a cutting and conveying mechanism 42, a cutting mechanism 43, and a receiving mechanism 44. The frame 41 serves as the supporting structure, with the cutting mechanism 43 mounted on it. The cutting and conveying mechanism 42 is mounted on the machine base 10 and connects with the transition device 30, so as to convey the laminated strip from the transition device 30 to the cutting and conveying mechanism 42 for processing it. The frame 41 includes a plurality of crossbeams and a plurality of longitudinal beams, which are interconnected to form a frame structure. The cutting and conveying mechanism 42, the cutting mechanism 43, and the receiving mechanism 44 are all housed within this frame structure. At least a portion of the cutting mechanism 43 is movably mounted on a crossbeam and can move in an extension direction of the crossbeam. This design enhances the stability of the cutting mechanism 43, allowing for high-speed operation and improved processing efficiency. The cutting mechanism 43 is located above the cutting and conveying mechanism 42 and is capable of cutting the laminated strip on the cutting and conveying mechanism 42. The receiving mechanism 44 is transversely movable arranged and located at the downstream stage of the cutting and conveying mechanism 42. After the cutting mechanism 43 cuts the composite strip, the tag is conveyed to the receiving mechanism 44.

In this embodiment, one set of the cutting and conveying mechanism 42, two sets of the receiving mechanisms 44, and two sets of the cutting mechanisms 43 are configured to enhance efficiency. The two sets of cutting mechanisms 43 are located above the cutting and conveying mechanism 42 and are arranged laterally with a gap between them. The cutting and conveying mechanism 42 is located below the gap between two sets of cutting mechanisms 43. The two sets of receiving mechanisms 44 are located on either side of the cutting and conveying mechanism 42, corresponding to the two cutting mechanisms 43 for simultaneous cutting. The workflow is as follows: the two sets of cutting mechanisms 43 move simultaneously, cutting the tags on the conveying line of the central cutting and conveying mechanism 42 and placing them on the mounting reference plate platforms of the receiving mechanisms 44 on both sides. Then, the cut tags are collected and wound by the subsequent receiving device 50.

The cutting and conveying mechanism 42 in this embodiment includes a vision camera, a mounting reference plate, a conveying belt, a conveying belt motor, a tag positioning sensor, and a tension wheel. Its function is to drive the belt by use the conveying belt motor, thereby conveying the electronic tags on the conveying belt to a designated position. The vision camera identifies and positions the electronic tags during this process. Once positioned, the cutting mechanism 43 cuts the tags and places them on the mounting reference plate of this mechanism.

The receiving mechanism 44 in this embodiment includes a transverse guiding rail, a tag positioning sensor, a mounting reference plate, and a tension wheel. Its main function is to make the cutting mechanism 43 cut the tags and place them on the mounting reference plate of this mechanism.

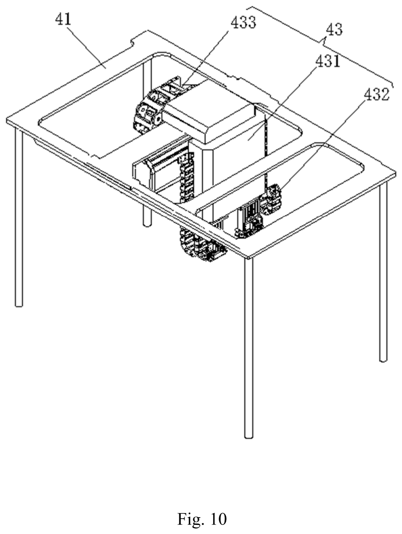

As shown in Fig. 10, the cutting mechanism 43 of this embodiment includes a cutting base body 431, a cutting drive component 432, and a transversing drive component 433. The cutting base body 431 is the main body, which is movably mounted on a crossbeam and can move along the length of the crossbeam. The length direction of the crossbeam is the same as the arrangement direction of the cutting and conveying mechanism 42 and the receiving mechanism 44, so that the cutting mechanism 43 can switch positions between the cutting and conveying mechanism 42 and the receiving mechanism 44 as it moves along the length of the crossbeam. The cutting drive component 432 may be a cylinder or the like, which is located at the bottom end of the cutting base body 431 and moves synchronously with the cutting base body 431. The bottom end of the cutting drive component 432 has a cutting head for cutting the laminated strip, thereby cutting the laminated strip. The transversing drive component 433 may be an electric cylinder or the like, which is mounted on the crossbeam and drivingly connected with the cutting base body 431, thereby driving the cutting base body 431 and the cutting drive component 432 to move transversely, so as to place the cut chips onto the isolation film of the mounting reference plate in sequence.

As shown in Figs. 1 and 2, in this embodiment, the machine base 10 includes a base body 11 and a protective cover 12. The base body 11 is the main structure, on which the laminating device 20, the transition device 30, the cutting device 40, and the receiving device 50 are mounted. The protective cover 12 is placed on the base body 11, and naturally, it also covers the outside of the laminating device 20, the transition device 30, and the cutting device 40, thus making the entire device an integrated equipment.

In this embodiment, the receiving device 50 is not always kept inside the protective cover 12, as the finished reel needs to be unloaded once it reaches a certain amount. Specifically, the end of the protective cover 12, that is, the end along the conveying direction of the laminated strip, is equipped with an openable/closable safety door 121. The safety door 121 is located at the receiving device 50, which is designed to be tiltable. The receiving device 50 can collect, wind, and convey the tags cut in the previous process to the outside of the equipment. During normal receiving, the safety door 121 is closed, and the receiving device 50 is not tilted and remains inside the protective cover 12, so as to perform its task of winding the isolation film carrying the tags into a reel. When the collected material reaches a certain amount, the safety door 121 opens, and then the receiving device 50 actuates and tilts out of the protective cover 12, thereby allowing the reel on the collecting device to be unloaded. This design automatically delivers the finished material to the outside of the equipment after production, significantly reducing the requirements for frequent opening and closing of the equipment door and manual operation time when personnel collect material, and thus improving the safety of personnel operation and the intelligence of the equipment.

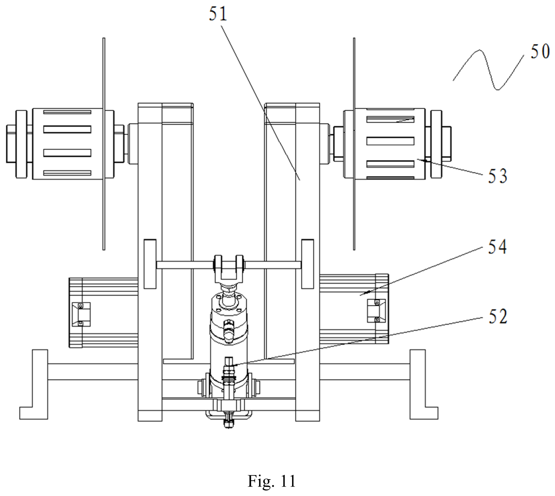

In this embodiment, the machine base 10 is equipped with a fixed base on which a fixed shaft is installed. The receiving device 50 rotates around the fixed shaft. As shown in Fig. 11, the receiving device 50 includes a receiving base body 51, a tilting drive component 52, a receiving hub 53, and a receiving drive component 54. The receiving base body 51 is the main body, and a fixed shaft passes through receiving base body 51, thereby allowing the receiving base body 51 to be rotatably mounted at the fixed shaft. The tilting drive component 52 may be a cylinder or the like, of which one end is fixed to the machine base 10 and the other end is connected to the tilting shaft on the receiving base body 51. When the tilting drive component 52 is activated, it drives the tilting shaft to actuate the receiving base body 51, thus achieving the effect of tilting the receiving base body 51. A receiving hub 53 is rotatably mounted on the receiving base body 51. The receiving hub 53 is configured to collect wound reels. In this embodiment, the receiving hub 53 is located at the top of the receiving base body 51, and the fixed shaft is located at the bottom of the receiving base body 51. Thus, when the receiving base body 51 is tilted, the receiving hub 53 at the top can extend out of the protective cover 12, thereby allowing personnel or subsequent equipment to unload the material. The receiving drive component 54 may be a motor or the like, which is drivingly connected to the receiving hub 53 to drives the receiving hub 53 to rotate, thereby realizing the rotation of the receiving hub 53 to receive the material.

It should be noted that "multiple" or "a plurality of" in the above embodiment refers to at least two.

From the above description, it can be seen that the embodiments of this application achieve at least the following technical effects:
1. It solves the problem that existing equipment cannot achieve efficient processing;
2. It allows for manual feeding from the same side, thereby eliminating the need to switch positions back and forth between both sides, thus facilitating feeding and significantly improving feeding efficiency, which in turn increases processing efficiency;
3. It prevents the film from being pulled into the conveying roller 32 and causing tearing or breakage. As a result, the film can be collected continuously, reducing the time required for manual rewinding the film and thereby improving processing efficiency;
4. The integrated laminating and cutting equipment for the RFID electronic tag performs optimizing, so that it enables continuous and efficient processing and thus improving processing efficiency;
5. The integrated laminating and cutting equipment for the RFID electronic tag can perform both laminating and cutting processes, thereby reducing the overall cost of the equipment compared to two separate devices while still meeting processing requirements;
6. It automatically delivers the finished material to the outside of the equipment after production, significantly reducing the requirements for frequent opening and closing of the equipment door and manual operation time when personnel collect material, and thus improving the safety of personnel operation and the intelligence of the equipment.

The embodiments described above are only some embodiments of this application, not all embodiments. Based on the embodiments in this application, all other embodiments obtained by those skilled in the art without creative effort should fall within the scope of protection of this application.

The above descriptions are only preferred embodiments of this application and are not intended to limit this application. For those skilled in the art, this application can have various modifications and variations. Any modifications, equivalent substitutions, or improvements made within the spirit and principles of this application shall be included within the scope of protection of this application.

## Claims

1. An integrated laminating and cutting equipment for an RFID electronic tag, **characterized by** comprising:
a machine base (10);
a laminating device (20); and
a cutting device (40), wherein the laminating device (20) and the cutting device (40) are arranged on the machine base (10) and connected sequentially in the processing order,
wherein the laminating device (20) is capable of laminating a chip and rubber compound to form a laminated strip with a tag, the laminating device (20) comprises a vertical plate (21), a chip feeding mechanism (22), and a rubber compound feeding mechanism (23), the chip feeding mechanism (22) and the rubber compound feeding mechanism (23) are mounted on the vertical plate (21);
the cutting device (40) is capable of cutting the laminated strip, the cutting device (40) comprises a frame (41), a cutting and conveying mechanism (42), a cutting mechanism (43), and a receiving mechanism (44).

2. The integrated laminating and cutting equipment for the RFID electronic tag according to claim 1, **characterized in that**, the laminating device (20) further comprises a rotating mechanism (24), the rotating mechanism (24) comprises:
a support (241) comprising a longitudinal segment and a transverse segment connected in sequence, the longitudinal segment being erected on the machine base (10), and the transverse segment extending transversely and being connected to a top end of the longitudinal segment;
a rotating swing arm (242) rotatably mounted through the transverse segment and located above the chip feeding mechanism (22) and the rubber compound feeding mechanism (23);
a rotating drive component (243) connected to the support (241) and drivingly connected to the rotating swing arm (242) to rotate the rotating swing arm (242);
a picking-up drive component (244) arranged on the rotating swing arm (242) and rotated along with the rotating swing arm (242), the picking-up drive component (244) has a picking-up head for picking up at a bottom end.

3. The integrated laminating and cutting equipment for the RFID electronic tag according to claim 1, **characterized in that**, the laminating device (20) further comprises a laminating mechanism (25) arranged on the rubber compound feeding mechanism (23), wherein the laminating mechanism (25) is capable of laminating the chip conveyed to the rubber compound feeding mechanism (23) with the rubber compound.

4. The integrated laminating and cutting equipment for the RFID electronic tag according to claim 3, **characterized by** further comprising a transition device (30), wherein the transition device (30) comprises a guiding frame (31) and a conveying roller (32), the guiding frame (31) has a peeling surface (311) which is capable of a film on a surface of the laminated strip with the tag during the laminated strip formed by laminating the chip with rubber compound passing through the transition device (30), wherein the peeling surface (311) is located on a side of the guiding frame (31) facing an input end of the transition device (30), and the peeling surface (311) is inclined towards a direction closer to the laminated strip in the conveying direction of the laminated strip.

5. The integrated laminating and cutting equipment for the RFID electronic tag according to claim 4, **characterized in that**, the transition device (30) further comprises a film collecting reel (33), wherein the film is wound and collected on the film collecting reel (33), and moves along the peeling surface (311) under the drive of the film collecting reel (33).

6. The integrated laminating and cutting equipment for the RFID electronic tag according to claim 4, **characterized in that**, a plurality of the guiding frames (31) are arranged, wherein at least one of the guiding frames (31) is provided with the peeling surface (311); a plurality of conveying rollers (32) are arranged, wherein at least two of the conveying rollers (32) are arranged opposite to each other vertically with a gap therebetween; the laminated strip passes through the gap between the vertically arranged conveying rollers (32); and the guiding frame (31) is located at the conveying roller (32).

7. The integrated laminating and cutting equipment for the RFID electronic tag according to claim 1, **characterized in that**, the frame (41) comprises a plurality of crossbeams and a plurality of longitudinal beams, the plurality of crossbeams and the plurality of longitudinal beams form a frame structure; the cutting and conveying mechanism (42) is located on an output side of the laminating device (20), and the laminated strip is conveyed to the cutting and conveying mechanism (42) for cutting; at least a portion of the cutting mechanism (43) is movably arranged on the crossbeam and moves in an extension direction of the crossbeam, the cutting mechanism (43) is located above the cutting and conveying mechanism (42) and is capable of cutting the laminated strip on the cutting and conveying mechanism (42); the receiving mechanism (44) is transversely and movably arranged and located at a downstream process of the cutting conveying mechanism (42), and after the cutting mechanism (43) cuts the laminated strip, the cut tags are conveyed to the receiving mechanism (44).

8. The integrated laminating and cutting equipment for the RFID electronic tag according to claim 7, **characterized in that**, the cutting mechanism (43) comprises:
a cutting base body (431) movably arranged on the crossbeam;
a cutting drive component (432) arranged at a bottom end of the cutting base body (431), wherein the cutting drive component (432) has a cutting head for cutting the laminated strip at a bottom end;
a transversing drive component (433) arranged on the crossbeam and drivingly connected to the cutting base body (431) to move transversely the cutting base body (431) and the cutting drive component (432).

9. The integrated laminating and cutting equipment for the RFID electronic tag according to claim 1, **characterized by** further comprising a receiving device (50), wherein the machine base (10) comprises a base body (11) and a protective cover (12), the laminating device (20), the cutting device (40) and the receiving device (50) are arranged on the base body (11), and the protective cover (12) covers the base body (11) and covers an outside of the laminating device (20) and the cutting device (40).

10. The integrated laminating and cutting equipment for the RFID electronic tag according to claim 9, **characterized in that**, the protective cover (12) has an openable and closable safety door (121), the safety door (121) is located at the receiving device (50), the receiving device (50) is capable of receiving, coiling and conveying the tags cut in a previous process to an outside of the equipment, the receiving device (50) is tiltable, and when the safety door (121) is opened, the receiving device (50) tilts out of the protective cover (12).

11. The integrated laminating and cutting equipment for the RFID electronic tag according to claim 10, **characterized in that**, the machine base (10) further comprises a fixed shaft, and the receiving device (50) comprises:
a receiving base body (51) rotatably arranged at the fixed shaft;
a tilting drive component (52) connected to the receiving base body (51) and configured to tilt the receiving base body (51);
a receiving hub (53) rotatably arranged on the receiving base body (51), wherein when the receiving base body (51) is tilted, the receiving hub (53) extends out of the protective cover (12); and
a receiving drive component (54) drivingly connected to the receiving hub (53) to rotate the receiving hub (53).
